# EUROPEAN PATENT SPECIFICATION

(11) **EP 1 018 577 B1**
(45) Date of publication and mention of the grant of the patent: **04.01.2006**
(21) Application number: 98941776.1
(22) Date of filing: 09.09.1998
(51) Int. Cl.: E02D 29/12, E06C 9/02

(54) **STEPPING TOOL FOR MANHOLE OR THE LIKE**
TRITTELEMENT FÜR SCHACHT ODER ÄHNLICHES
ELEMENT D'ECHELLE POUR REGARD OU ANALOGUE

(30) Priority: 10.09.1997 JP 26113397
(43) Date of publication of application: 12.07.2000
(73) Proprietor: MIYAMA KOGYO KABUSHIKI KAISHA, Soka-shi, Saitama-ken 340-0011 (JP)
(72) Inventor: TAKAHASHI, Eizou, Soka-shi, Saitama-ken 340-0011 (JP)
(74) Representative: Goddar, Heinz J.
(86) International application number: PCT/JP1998/004037
(87) International publication number: WO 1999/013169

(56) References cited:
- EP-A- 0 744 498
- GB-A- 470 919
- JP-A- 9 032 022
- JP-B2- 2 622 826
- US-A- 4 778 032

## Description

### TECHNICAL FIELD

The present invention relates to a foothold of a manhole, etc. comprising a tread and side portions extending from and positioned at both sides of the tread.

### BACKGROUND TECHNOLOGY

A conventional foothold of a manhole, etc. of this type is disclosed, for example, in Japanese Patent No. 2,622,826 in which the foothold comprises a tread upper surface of which is inclined upwardly from a central portion thereof toward end portions thereof at an angle ranging from 1 to 5 degrees so that operators put their feet on the tread in a natural posture while they are not fatigued with their feet or knees.

However, according to this known foothold, since operators slip at the inclined surface and become unstable unless inner sides of their feet are certainly positioned on the central upper surface of the tread when they move up and down, both feet are aligned so as to contact each other on the tread of the same foothold, which causes a problem that both feet become tangled, which render them feel cramped.

A foothold according to the preamble of claim 1 is disclosed by EP-A-0 744 498.

### DISCLOSURE OF THE INVENTION

The present invention has been made to solve the aforementioned problems of the prior art and it is an object of the invention to provide a foothold of a manhole, etc. which enables operators to put their feet on a tread in a natural state under a stable condition, and to reduce their fatigue with their feet or knees when they move up and down in the manhole by use of the foothold including the tread having the upwardly inclined surface at intervals.

To achieve the above object, a foothold of a manhole, etc. of the present invention is characterized in that at least an upper surface of a tread comprises a horizontal portion extending from a central portion of the tread toward side portions thereof and inclined portions inclined upwardly from both ends of the horizontal portion to both ends thereof at an angle ranging from 1 to 5 degrees.

The foothold of the present invention is characterized in that the tread comprises a core and synthetic resin covering the core, and the core being linear and disposed horizontally, and the synthetic resin covering the core comprising a uniform portion being uniform in thickness from a central portion thereof to side portions thereof and an inclined portion being inclined upwardly from both ends of the uniform portion and being of increasing thickness from both ends of the uniform portion to both ends thereof at an angle ranging from 1 to 5 degrees.

The foothold of the present invention is characterized in that at least an upper surface of the tread comprises first indined portions inclined downwardly from a central portion of the tread toward side portions thereof and second inclined portions inclined upwardly from both ends of the first inclined portion to both ends thereof at an angle ranging from 1 to 5 degrees.

The foothold of the present invention is characterized in that the tread comprises a core and synthetic resin covering the core, and the core being linear and disposed horizontally, and the synthetic resin covering the core comprising first inclined portions inclined downwardly from a central portion thereof toward side portions thereof and second inclined portions inclined upwardly from both ends of the first inclined portion to the horizontal surface at an angle ranging from 1 to 5 degrees.

### BRIEF DESCRIPTION OF THE DRAWINGS

Fig.1 is a front view of a foothold of a manhole, etc. according to an embodiment of the invention;
Fig. 2 is a plan view of Fig.1; and
Fig. 3 is a front view of a foothold of a manhole, etc. according to another embodiment of the invention.

### BEST MODE FOR CARRYING OUT THE INVENTION

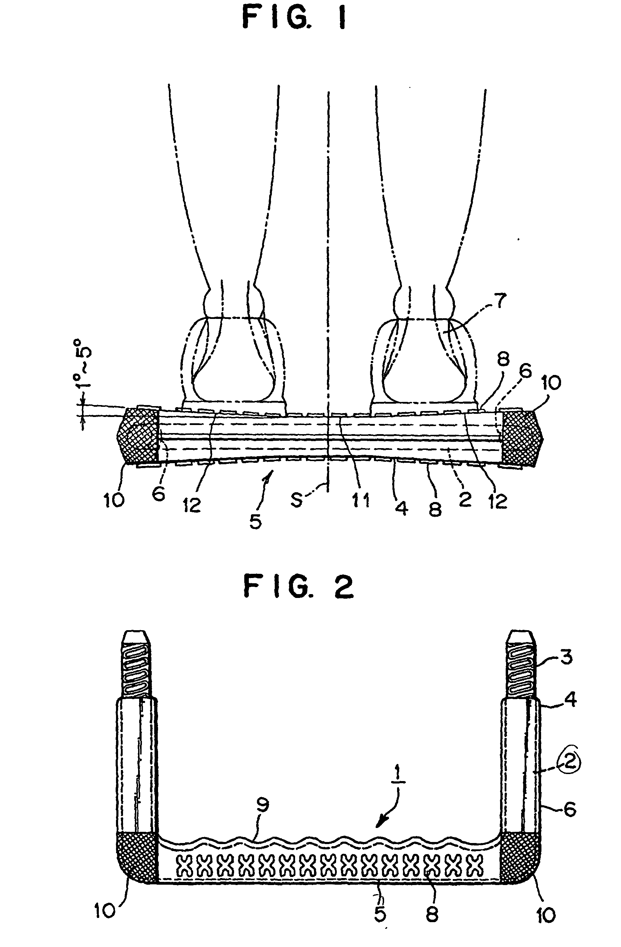

An embodiment of the present invention is now described with reference to Figs. 1 to 3. First, in Figs. 1 and 2 showing a first embodiment of the present invention, a numeral 1 depicts a foothold as a whole, and it comprises a core 2 made of iron and having a U shape when viewed from the plane thereof, legs 3 extending from the core 2 and synthetic resin 4 such as polypropylene for covering the core 2 except a part of each leg 3 in order to prevent the core 2 from being rusted. The foothold 1 is fixed to a manhole in a state where the legs 3 which are not covered by the synthetic resin 4 are embedded, for example, into concrete of the manhole.

A numeral 5 depicts a tread formed in the foothold 1, and 6 is side portions formed on both sides of the tread 5. The tread 5 has a plurality of slip prevention patterns 8 on the upper surface in the axial direction thereof so as to prevent feet 7 of operators from being slipped A corrugated grip portion 9 is formed on the upper surface of the tread 5 in its axial direction so that they can grip the tread 5 with their hands. Reflectors 10 are provided on both ends of the tread 5.

As shown in Fig. 1, the tread 5 is structured in such a manner that the horizontal linear core 2 is covered with the synthetic resin 4 at its entire surface. The synthetic resin 4 comprises a uniform horizontal portion 11 which is uniform in thickness from a central portion S thereof to side portions 6,6 and inclined portions 12 which are inclined upwardly from both ends of the uniform horizontal portion 11 and are of increasing thickness from both ends of the uniform horizontal portion 11 to both ends thereof at an angle ranging from 1 to 5 degrees. The tread 5 also has the uniform horizontal portion 11, the inclined portions 12 the slip prevention patterns 8 and the reflectors 10, thereby enabling the foothold 1 to be used reversibly. However, the synthetic resin 4 may be uniform in thickness at its lower surface and is of increasing thickness only at its upper surface as set forth above.

Since the foothold 1 is structured as mentioned above, when the operators move up and down utilizing a plurality of footholds 1 which are provided vertically in the manhole, etc., they put or step their feet 7 alternately on the tread 5 of each foothold 1. Since the tread 5 has the horizontal portion 11 and it is inclined upwardly from both ends of the horizontal portion 11 toward the side portions 6, 6 at the angle ranging from 1 to 5 degrees at least at the upper surface thereof, the operators step their feet 7 on the end portions of the inclined portions 12 while their feet are slightly opened or spaced and are positioned at demarcating portion between the inclined portions 12 toward the horizontal portion 11 at the inner sides thereof, they can step their feet 7 on the tread 5 in a more natural state without being slipped from the inclined portions 12 toward the horizontal portion 11. As a result, they can move up and down without being slid and missing their footing on the tread in a stable condition, and hence they are not fatigued with their feet or knees.

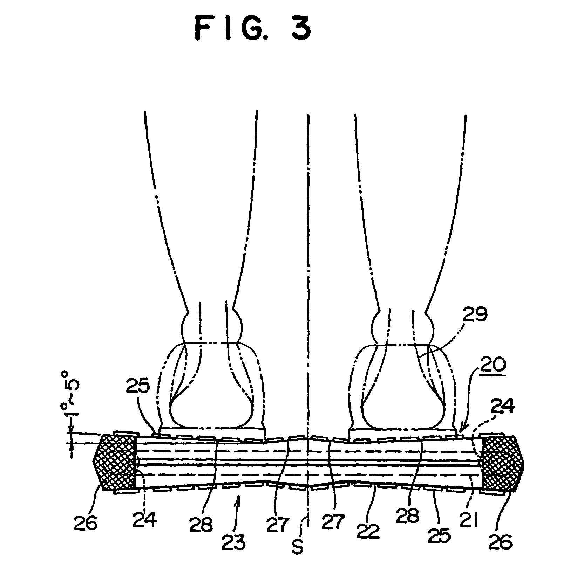

A foothold as shown in Fig. 3 as a second embodiment of the present invention is next described.

The foothold 1 comprises a core 21 which is made of iron and has a U shape when viewed from the plane thereof, and synthetic resin 22 such as polypropylene for covering the core 21 except a part of legs extended from the core 21 in order to prevent the core 21 from being rusted.

A numeral 23 depicts a tread formed in the foothold 1, and 24 is side portions 24 formed on both sides of the tread 23.

The tread 23 has a plurality of slip prevention patterns 25 on the upper surface in the axial direction thereof as to prevent operators from being slipped at their feet 7, and reflectors 26 are provided at both sides of the tread 23.

The tread 23 comprises first inclined portions 27, 27 which are inclined downwardly from the central portion S thereof toward side portions 24, 24 and are of decreasing thickness from the central portion S to both ends thereof and second inclined portions 28, 28 inclined upwardly from both ends of the first inclined portions 27, 27 relative to the horizontal surface at an angle ranging from 1 to 5 degrees and are of increasing thickness from both ends of the first inclined portions 27, 27 to the side portions 24, 24. The tread 23 also has the first inclined portions 27, 27, the second inclined portions 28, 28, the slip prevention patterns 25 and the reflectors 26, 26 at its lower surface, whereby the foothold 1 can be used reversibly. However, the tread 23 may be made uniform at the lower surface thereof in thickness while only the upper surface thereof may be of gradually increasing as set forth above.

Since the foothold 1 is structured as set forth above, also in the second embodiment, a plurality of foothold 20 are arranged vertically in the manhole in such a manner that operators put their feet 29 on the tread 23 of the footholds 20 successively when moving up and down utilizing the footholds 20. Since the foothold 20 comprises the tread 23 having the first inclined portions 27, 27 inclined downwardly from the central portion S thereof toward side portions 24, 24 and are decreasing thickness from the central portion S to both ends thereof and second inclined portions 28, 28 inclined upwardly from both ends of the first inclined portions 27, 27 relative to the horizontal surface at an angle ranging from 1 to 5 degrees, operators step their feet 29 on the end portions of the inclined portions 28, 28 while their feet are slightly opened or spaced and are positioned at demarcating portion between the inclined portions 28 toward the first inclined portions 27 at the inner sides thereof, so that they can step their feet 29 on the tread 23 in a more natural state without being slipped. As a result, they can move up and down without being slid and missing their footing on the tread 23 in a stable condition, and hence they are not fatigued with their feet or knees.

### INDUSTRIAL APPLICABILITY

According to the present invention, at least the upper surface of the tread is formed of a horizontal portion extending from the central portion toward side portions or the inclined portions inclined downwardly toward the side portions and another inclined portions inclined upwardly from both ends of the horizontal portion or the indined portions at the angle ranging from 1 to 5 degrees, operators can step their feet on the tread in more natural state when they move up and down utilizing the foothold, and hence they can move up and down in more stable condition, leading to a safe foothold for use in a manhole, etc. while operators are not fatigued with their feet or knees.

## Claims

1. A foothold comprising a tread and side portions extending from and positioned at both sides of the tread, **characterised in that** at least an upper surface of the tread comprises a horizontal portion extending from a central portion of the tread toward side portions thereof and inclined portions inclined upwardly from both ends of the horizontal portion to both ends of the tread at an angle ranging from 1 to 5 degrees.

2. A foothold according to Claim 1, wherein the tread comprises a core and synthetic resin covering the core, and the core being linear and disposed horizontally, and the synthetic resin covering the core comprising a uniform portion being uniform in thickness from a central portion thereof to side portions thereof and an inclined portion being inclined upwardly from both ends of the uniform portion and being of increasing thickness from both ends of the uniform portion to both ends of the tread at an angle ranging from 1 to 5 degrees.

3. A foothold comprising a tread being adapted to receive feet of a person thereon and side portions extending from and positioned at both sides of the tread, wherein at least an upper surface of the tread comprises first inclined portions inclined downwardly from a central portion of the tread toward side portions thereof and second inclined portions inclined upwardly from both ends of the first inclined portion to both ends of the tread at an angle ranging from 1 to 5 degrees.

## Patentansprüche

1. Trittelement mit einer Fußraste und Seitenabschnitten, die sich von beiden Seiten der Fußraste erstrecken und dort angeordnet sind, **dadurch gekennzeichnet, dass** zumindest eine obere Oberfläche der Fußraste einen horizontalen Abschnitt aufweist, der sich von einem zentralen Abschnitt der Fußraste zu Seitenabschnitten derselben hin erstreckt, und geneigte Abschnitte aufweist, die von beiden Enden des horizontalen Abschnitts zu beiden Enden der Fußraste in einem Winkel im Bereich von 1 bis 5 Grad nach oben geneigt sind.

2. Trittelement nach Anspruch 1, **dadurch gekennzeichnet, dass** die Fußraste einen Kern und ein den Kern bedeckendes Kunstharz hat, wobei der Kern gerade und horizontal angeordnet ist und das Kunstharz, dass den Kern bedeckt einen einheitlichen Abschnitt aufweist, der von einem zentralen Abschnitt zu Seitenabschnitten hin einheitlich in der Dicke ist, und einen geneigten Abschnitt aufweist, der von beiden Enden des einheitlichen Abschnitts bis zu beiden Enden der Fußraste geneigt und von zunehmender Dicke mit einem Winkel im Bereich von 1 bis 5 Grad ist.

3. Trittelement mit einer Fußraste passend um Füße einer Person darauf aufzunehmen und mit Seitenabschnitten die sich von beiden Seiten der Fußraste erstrecken und dort angeordnet sind, worin zumindest eine obere Oberfläche der Fußraste erste geneigte Abschnitte aufweist, die von einem zentralen Abschnitt der Fußraste zu Seitenabschnitten derselben hin nach unten geneigt sind, und zweite geneigte Abschnitte aufweist, die von beiden Enden des ersten geneigten Abschnitts zu beiden Enden der Fußraste in einem Winkel im Bereich von 1 bis 5 Grad nach oben geneigt sind.

## Revendications

1. Marchepied comprenant une marche et des parties latérales s'étendant à partir des côtés de la marche et positionnées au niveau de ceux-ci, **caractérisé en ce qu'**au moins une surface supérieure de la marche comprend une partie horizontale s'étendant à partir d'une partie centrale de la marche vers les parties latérales de celle-ci et des parties inclinées vers le haut à partir des deux extrémités de la partie horizontale jusqu'aux deux extrémités de la marche à un angle allant de 1 à 5 degrés.

2. Marchepied selon la revendication 1, dans lequel la marche comprend un noyau et une résine synthétique couvrant le noyau, le noyau étant linéaire et disposé horizontalement, et la résine synthétique couvrant le noyau comprenant une partie uniforme qui est d'épaisseur uniforme à partir d'une partie centrale de celle-ci jusqu'aux parties latérales de celle-ci et une partie inclinée qui est inclinée vers le haut à partir des deux extrémités de la partie uniforme et qui est d'épaisseur croissante à partir des deux extrémités de la partie uniforme jusqu'aux deux extrémités de la marche à un angle allant de 1 à 5 degrés.

3. Marchepied comprenant une marche adaptée pour y recevoir les pieds d'une personne et des parties latérales s'étendant à partir des côtés de la marche et positionnées au niveau de ceux-ci, dans lequel au moins une surface supérieure de la marche comprend des premières parties inclinées vers le bas à partir d'une partie centrale de la marche vers les parties latérales de celle-ci et des deuxième parties inclinées vers le haut à partir des deux extrémités de la première partie inclinée jusqu'aux deux extrémités de la marche à un angle allant de 1 à 5 degrés.
